# EUROPÄISCHE PATENTSCHRIFT

(11) **EP 3 434 092 B1**
(45) Veröffentlichungstag und Bekanntmachung des Hinweises auf die Patenterteilung: **01.09.2021**
(21) Anmeldenummer: 18183093.6
(22) Anmeldetag: 12.07.2018
(51) Int. Cl.: A01D 34/00, A01D 42/00, A01D 43/00, G05D 1/02

(54) **IM AUSSENBEREICH SELBSTTÄTIG VERFAHRBARES ARBEITSGERÄT**
AUTOMATICALLY MOVABLE EXTERNAL WORK DEVICE
APPAREIL DE TRAVAIL AUTONOME DANS UNE ZONE EXTÉRIEURE

(30) Priorität: 24.07.2017 DE 102017116659
(43) Veröffentlichungstag der Anmeldung: 30.01.2019
(73) Patentinhaber: Vorwerk & Co. Interholding GmbH, 42275 Wuppertal (DE)
(72) Erfinder: Hackert, Georg, 44869 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Koetz, Hendrik, 58300 Wetter (DE); Mosebach, Andrej, 44809 Bochum (DE); Ortmann, Roman, 47057 Duisburg (DE); Dulinski, Robin, 42283 Wuppertal (DE)
(74) Vertreter: Müller, Enno

(56) Entgegenhaltungen:
- WO-A1-97/49528
- WO-A1-2010/077198
- CN-A- 105 123 090
- DE-A1-102009 027 557
- US-A1- 2004 264 761
- US-A1- 2006 213 167
- US-A1- 2014 303 814
- US-A1- 2015 142 250
- US-A1- 2016 157 414
- US-B2- 6 611 738
- US-B2- 8 295 979

## Beschreibung

### Gebiet der Technik

Die Erfindung betrifft ein System zur Gartenpflege mit einem im Außenbereich selbsttätig verfahrbares Arbeitsgerät, das mit Hilfe eines von einer Steuereinrichtung unter Verwendung einer Sensorik berührungsfrei gewonnenen Sensordaten und ggf. einer in einem Speicherelement gespeicherten Kartografie gesteuerten Fahrwerks verfahrbar ist und das von der Steuereinrichtung an Orte eines Geländes, an denen eine Aufgabe verrichtet werden soll, bei der dem Arbeitsgerät zugeordnete, aufgabenspezifische Werkzeuge verwendet werden, navigierbar ist, wobei die Werkzeuge jeweils einem Arbeitsmodul zugeordnet sind, welches Arbeitsmodul austauschbar gegen ein anderes Arbeitsmodul mit anderen Werkzeugen dem Arbeitsgerät zugeordnet ist

### Stand der Technik

Derartige Arbeitsgeräte sind bspw. als selbstfahrende Rasenmäher im Stand der Technik bekannt. Bekannt sind insbesondere aus der EP 2 423 893 im Innenbereich verwendbare Kehrroboter in Form selbstfahrender, Werkzeuge zum Reinigen aufweisender Geräte.

Aus der US 6 611 738 B2 ist des Weiteren ein multifunktionaler Roboter bekannt, welcher zum Zwecke einer selbsttätigen Fortbewegung eine Umgebungskarte erstellt und anhand von Befehlen eines Nutzers Aufgaben in der Umgebung, beispielsweise Mähen, Saugen, Schrubben, Polieren, ausführt. Der Nutzer steuert Arbeitsaufgaben über das Internet, wobei beispielsweise zur Ausführung von Gartenpflege lokale Informationen über Regenfälle, Temperatur, Sonnenstunden und ähnliches genutzt werden können.

Die Veröffentlichung DE 10 2009 027557 A1 offenbart beispielsweise eine sich selbsttätig fortbewegende Arbeitsvorrichtung, die unter anderem auch Garten- oder Agrararbeiten ausführen kann. Die Arbeitsvorrichtung wird über ein Bedienteil bedient, über das Funktionen von einem Nutzer ansteuerbar sind.

Weiterer Stand der Technik ist in den Veröffentlichungen WO 2010/077198 A1, WO 97/49528 A1 und CN 105123090 A angegeben.

### Zusammenfassung der Erfindung

Der Erfindung liegt die Aufgabe zugrunde, ein autonomes Outdoor-Gerät anzugeben, welches Pflanzenpflegearbeiten, insbesondere selbsttätig durchführen kann.

Gelöst wird die Aufgabe durch die in den Ansprüchen angegebene Erfindung.
Erfindungsgemäß wird das Arbeitsgerät dahingehend weitergebildet, dass die Werkzeuge einem werkzeugspezifischen Arbeitsmodul zugeordnet sind. Die Arbeitsmodule können wahlweise mit dem Arbeitsgerät verbunden werden. Sie sind austauschbar gegen ein anderes Arbeitsmodul dem Arbeitsgerät zugeordnet. Hierzu kann das Arbeitsgerät einen Modulträger aufweisen zur Aufnahme des Arbeitsmoduls. Das Arbeitsgerät kann jeweils mit einem Arbeitsmodul bestückt werden, das mit seinem Werkzeug eine bestimmte Aufgabe, insbesondere Pflanzenpflegeaufgabe bewältigen soll. Die Aufgaben können dem Arbeitsgerät individuell durch den Benutzer gegeben werden. Hierzu kann der Benutzer ein Datenkommunikationsgerät verwenden, bspw. einen Personalcomputer, ein mobiles Endgerät (Handy, Smartphone) oder einen Tabletrechner. Das Arbeitsgerät besitzt eine Sende-/Empfangseinrichtung, um unmittelbar mit dem Datenkommunikationsgerät zu kommunizieren. Es kann aber auch über eine Datenübertragungseinrichtung in Form eines Netzwerkes mit dem Datenkommunikationsgerät kommunizieren. Es ist ferner vorgesehen, dass die Sensorik nicht nur zur Navigation des Arbeitsgerätes verwendet wird, sondern auch zum Erfassen von Umgebungsparametern, die die zu pflegenden Pflanzen betreffen. So ist insbesondere vorgesehen, dass mit den Sensoren die aktuelle Lufttemperatur, die Luftfeuchte, eine UV-Einstrahlung, eine Helligkeit und/oder eine Bodenfeuchtigkeit erfassbar sind. Das Arbeitsgerät kann so eingerichtet sein, dass es selbsttätig Ermittlungsfahrten unternimmt, in den das Arbeitsgerät unter Einsatz der Sensoren, die insbesondere bildgebende Sensoren, wie eine Kamera, umfassen, den aktuellen Wachstumszustand von zu pflegenden Pflanzen ermittelt. Aktuell mit der Kamera aufgenommene Strukturdaten der Umgebung können mit älteren Daten verglichen werden, um dem Benutzer Vorschläge für eventuell erforderliche Pflegearbeiten zu unterbreiten. Dabei werden jahreszeitspezifische Informationen mitberücksichtigt, bspw. Informationen, die Angaben über die günstigsten Schnittzeiten oder Schnittverbotzeiten enthalten. Es ist ferner vorgesehen, dass das Arbeitsgerät mit einem Planungshilfsmittel zusammenwirkt, das eine in einer externen Recheneinrichtung verwendete Datenbank benutzt, in der Pflegeinformationen für Pflanzen aufweisende Pflegedaten gespeichert werden. Das Arbeitsgerät ist bevorzugt in der Lage, über eine Datenübertragungseinrichtung mit der Datenbank zu kommunizieren. Bei dieser Datenübertragungseinrichtung kann es sich um ein Netzwerk handeln. Die Recheneinrichtung ist dabei derart eingerichtet, dass aus den Pflegedaten Aufgabendaten erzeugt werden, die an das Arbeitsgerät oder an das Datenkommunikationsgerät des Benutzers übermittelt werden. Die Pflegedaten enthalten ortsspezifische Daten des Einsatzortes. Es handelt sich dabei um landschafts- und gartenbauspezifische Informationen und auch Informationen über die am Einsatzort vorhandenen Werkzeuge. Es ist ferner vorgesehen, dass die Pflegedaten vom Arbeitsgerät selbsttätig gepflegt werden, indem das Arbeitsgerät und die mit seiner Sensorik gewonnen aktuellen Zustandsdaten an die Recheneinrichtung übermittelt. Die Zustandsdaten können dann zur Berechnung der Aufgabendaten verwendet werden. Bei den Aufgabendaten kann es sich um Bewässerungsangaben, Reinigungsangaben oder Schnittangaben für die Pflanzen handeln. Diese Aufgabendaten werden dem Arbeitsgerät übermittelt, das dann seine Modulträger mit dem für die Verrichtung der Aufgabe erforderlichen Arbeitsmodul bestückt. Die wahlweise am Arbeitsgerät anbringbaren Module können am Ort der Basisstation bevorratet werden, bspw. kann an der Basisstation ein diesbezüglich wetterfestes Gehäuse, bspw. ein Schuppen vorgesehen sein. Es besteht eine lösbare Verbindung zwischen dem Modul und dem Arbeitsgerät. Hierzu kann das Arbeitsgerät einen entsprechend standardisiert ausgebildeten Modulträger aufweisen. Das Modul kann mittels mechanischer Haltemittel am Modulträger befestigt sein. Diese mechanischen Haltemittel sind lösbar, um das Modul vom Modulträger zu entfernen und gegen ein anderes Modul auszutauschen. Es ist ferner eine elektrische Schnittstelle zwischen Modul und Modulträger vorgesehen. Bei der elektrischen Schnittstelle kann es sich um eine Steckverbindung handeln. Über die elektrische Schnittstelle kann eine Versorgungsspannung vom Modulträger an das Modul übertragen werden. Es ist ferner vorgesehen, dass über die elektrische Schnittstelle Daten zwischen dem Arbeitsgerät und dem Modul ausgetauscht werden können. Weist das Modul einen Akkumulator auf, so kann auch vorgesehen sein, dass über die elektrische Schnittstelle das Arbeitsgerät von diesem Akkumulator energieversorgt wird. Die im Arbeitsgerät gespeicherte Kartografie enthält Angaben über den Ort der Basisstation und/oder den Aufbewahrungsort für die Arbeitsmodule. Ferner enthält die Kartografie Angaben über den Ort der zu pflegenden Pflanzen und die Art der dort gepflanzten Pflanze. Es kann sich dabei um zweidimensionale Oberflächendaten einer Basiskartierung handeln, die unter Verwendung von Sensordaten, die mit einem Sensormodul aufgenommen worden sind, zu 3D-Daten ergänzt worden sind, welche Wuchshöhen der Pflanzen und insbesondere ein Volumenmodell einzelner Pflanzen oder einer Pflanzenanordnung enthalten. Es ist ferner vorgesehen, dass das Arbeitsgerät mit einem oder mehreren weiteren Sensormodulen zusammenwirkt. Bei dem Sensormodul kann es sich um ein selbstfahrendes Sensormodul handeln, welches lediglich ein oder mehrere der oben genannten Sensoren umfasst, mit denen körperliche Merkmale von Objekten der Umgebung aus verschiedenen Perspektiven erfassbar sind und Umgebungsdaten und insbesondere Strukturdaten der Pflanzen ermittelbar sind. Auch lässt sich mit dem Sensormodul die lokale Bodenfeuchtigkeit oder ein Abbild der Umgebung ermitteln. Das ergänzende Sensormodul ist insbesondere dazu vorgesehen, um Umgebungsstrukturdaten aus einer anderen Perspektive zu erfassen, so dass entweder die externe Recheneinrichtung oder die Steuereinrichtung des Arbeitsgerätes ein dreidimensionales Abbild der Umgebung erzeugen kann. Auf der Basis dieses insbesondere dreidimensionalen Umgebungsbildes kann die externe Recheneinrichtung oder die Steuereinrichtung des Arbeitsgerätes dann insbesondere unter Vergleich mit älteren, insbesondere dreidimensionalen Abbildungen, eine Entscheidung treffen, ob ein oder mehrere Gewächse geschnitten werden müssen. Mittels Schnittwerkzeugen kann dann die spezifische Schnittbearbeitung vorgenommen werden. Mittels eines Bodenfeuchtesensors kann die Bodenfeuchtigkeit ermittelt werden. Mittels eines Bewässerungsmoduls kann, falls die Bodenfeuchtigkeit zu gering ist, eine Bewässerung vorgenommen werden. Hierzu kann das Bewässerungsmodul einen Wassertank aufweisen. Es kann aber auch mit einem Schlauch mit einer Zapfstelle verbunden sein. Weitere Arbeitsgeräte können verwendet werden, bspw. ein Mähwerkzeug, ein Kehrwerkzeug, ein Düngemittel-Verteilwerkzeug oder ein Bodenbearbeitungswerkzeug. Die Sensorik des Sensormoduls und/oder des Arbeitsgerätes kann ferner so ausgelegt sein, dass es Umgebungsstrukturdaten ermittelt, mit denen entschieden werden kann, ob eine Reinigung vorgenommen werden muss. Bspw. kann im Herbst ein Bedeckungsgrad des Untergrundes mit Laub ermittelt werden. Mit einer Kehreinrichtung kann dann das bspw. auf Rasenflächen oder anderen Freiflächen angesammelte Laub entfernt werden. Im Winter kann eine Schneehöhe gemessen werden und der Schnee an vorgegebenen Flächen geräumt werden. Das Sensormodul kann ein selbstfahrendes Fahrzeug sein. Es kann aber auch vom Arbeitsgerät selbst verfahren werden und an einem vorgegebenen Ort abgesetzt werden, wo es mit seiner Sensorik Zustandsdaten der Umgebung ermittelt. Das Sensormodul kann auch dauerhaft installiert sein und ist insbesondere über eine Datenübertragungseinrichtung mit dem Arbeitsgerät, einer Basisstation oder einer externen Recheneinrichtung verbunden. Wie auch das Arbeitsgerät selbst, kann das Sensormodul einen Akkumulator aufweisen, mit dem die Sensoren des Sensormoduls oder des Arbeitsgerätes versorgt werden. Es ist auch vorgesehen, dass das Sensormodul oder das Arbeitsgerät über eine autarke Energieversorgung, bspw. eine integrierte Fotovoltaik, verfügt. Es ist aber auch möglich, das Sensormodul mit einem Stromversorgungsnetz zu verbinden. Ein oder mehrere Sensormodule sind insbesondere mit der Sensorik des Arbeitsgerätes oder mit der eigenen Sensorik in der Lage, das räumliche Umfeld des bevorstehenden Arbeitseinsatzes zu detektieren. Auch kann der Arbeitseinsatz des Arbeitsgerätes selbst von den Sensoren des mindestens einen Sensormodules gesteuert werden. Auch hier findet eine Kommunikation, insbesondere drahtlose Kommunikation zwischen dem Arbeitsgerät und dem Sensormodul statt. Die Sensorik des mindestens einen Sensormoduls überwacht die Arbeit des Arbeitsgerätes aus insbesondere abweichenden Blickwinkeln. Nach einer Beendigung des Arbeitseinsatzes kann ein nicht stationäres Sensormodul vom Arbeitsgerät zurück zur Basisstation oder einer anderen Aufbewahrungsvorrichtung gebracht werden. Das Arbeitsgerät kann Greifer oder andere Hilfsmittel aufweisen, um das Sensormodul oder eines der verschiedenen Arbeitsmodule zu fassen. Das Sensormodul kann auch von einem autarken Roboter ausgebildet sein. Der Sensor-Roboter kann selbsttätig im Gelände navigieren und insbesondere auf dem Boden verfahren. Er nutzt dabei eine Kartografie des Geländes. Die Kartografie kann das Arbeitsgerät dem Sensor-Roboter zur Verfügung stellen. Es ist aber auch möglich, dass die Kartografie von der externen Recheneinrichtung zur Verfügung gestellt wird. Eine alternative Ausgestaltung des Sensormoduls sieht vor, dass das Sensormodul flugfähig ist. Es kann über eine bspw. GPSunterstützte Navigation ortsfest an einem Punkt oberhalb des Arbeitseinsatzes, also einer zu pflegenden Pflanze positioniert werden, um dem Arbeitsgerät Umgebungsdaten zu übertragen. Mit dem als Drohne ausgebildeten Sensormodul ist es zudem möglich, ohne die Verwendung weiterer Sensoren, mit einer dort eingebauten Kamera das Pflegeobjekt, bspw. einen Baum, vollständig dreidimensional zu erfassen, indem aus verschiedenen Perspektiven mehrere Abbildungen des Pflegeobjektes, bspw. des Baumes, gemacht werden, aus denen eine Recheneinrichtung ein dreidimensionales Modell erzeugt. Die Abbildungen werden in der Recheneinrichtung und insbesondere in der Datenbank als Volumenmodell einer Pflanze oder einer Pflanzengruppe hinterlegt. Ein den Ist-Zustand dokumentierendes aktuelles Volumenmodell kann mit einem zu einem früheren Zeitpunkt erstellten Volumenmodell verglichen werden, um eine Wuchshöhe zu bestimmen bzw. um eine Entscheidung zu treffen, ob ein Beschnitt der Pflanze vorgenommen werden muss.

### Kurze Beschreibung der Zeichnungen

Die Erfindung wird nachfolgend anhand beigefügter Zeichnungen erläutert. Es zeigen:

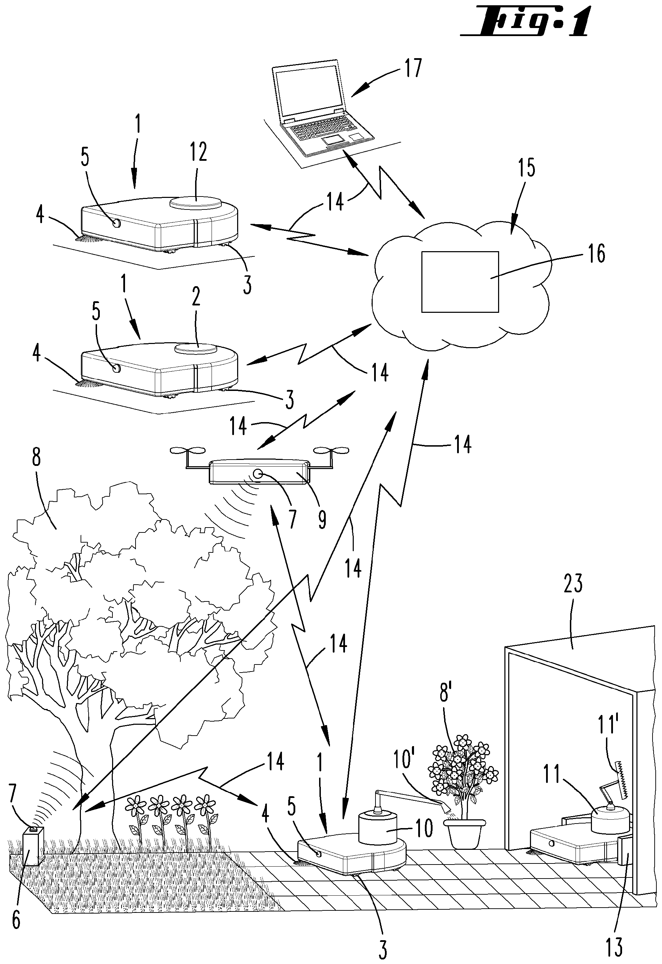

- Fig. 1: ein Pflanzen 8, 8' aufweisendes Gelände, ein Arbeitsgerät 1, zur Pflanzenpflege, ein Sensormodul 9 zur Erfassung von Umgebungsdaten und eine externe Recheneinrichtung 15 zur Kommunikation 14 mit einer Mehrzahl von Arbeitsgeräten 1 und/oder Datenkommunikationsgeräten 17,

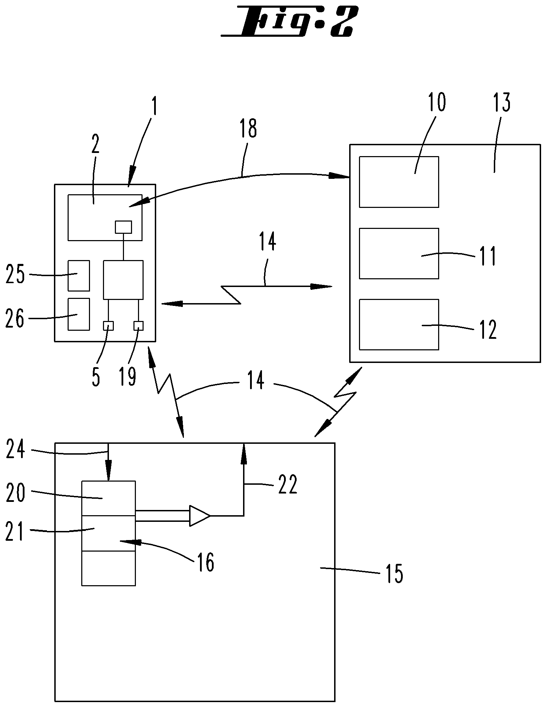

- Fig. 2: schematisch ein Arbeitsgerät 1, eine Basisstation 13 und die Kommunikationswege, mit denen mit einer externen Recheneinrichtung 15 kommuniziert wird.

### Beschreibung der Ausführungsformen

Die Erfindung befasst sich mit einem System zur Gartenpflege. Die wesentlichen Systembestandteile sind zumindest ein Arbeitsgerät 1, ein oder mehrere Arbeitsmodule 10, 11 und eine externe Recheneinrichtung 15, die über eine Datenübertragungseinrichtung 14, bei der es sich um ein Heimnetzwerk oder das Internet handeln kann, mit dem Arbeitsgerät 1 kommunizieren kann.

Das Arbeitsgerät 1 besitzt ein Gehäuse und innerhalb des Gehäuses ein Fahrwerk 3, das Räder, Kettenantriebe oder aber auch ein oder mehrere Luftschrauben aufweisen kann, mit denen das Arbeitsgerät 1 im Outdoorbereich, außerhalb von Gebäuden, in einem Garten, ggf. aber auch in der Luft, verfahren werden kann. Es besitzt eine Steuereinrichtung 12, bei der es sich um einen Mikrokontroller oder eine anderweitige programmgesteuerte Recheneinrichtung mit Speicherperipherie handeln kann.

Es sind Sensoren 5 vorgesehen, mit denen die Steuereinrichtung 12 strukturelle Daten der Umgebung bspw. die Form und die Größe von Gegenständen, wie Gebäuden, Pflanzen, aber auch Menschen und Tieren erfassen kann. Diese Daten dienen zunächst der Navigation des Arbeitsgerätes 1 im Gelände. In den Speicherelementen der Steuereinrichtung 12 kann darüber hinaus eine Kartografie des Geländes abgelegt sein, in der Rasenflächen, Nutz- oder Zierpflanzen-Beete, Bäume, Wege oder andere permanente Strukturdaten der Umgebung abgelegt sind, anhand der das Arbeitsgerät 1 selbsttätig im Gelände navigieren kann. Die Sensoren 5 umfassen darüber hinaus auch Sensoren zur Erfassung von sich im Laufe der Zeit ändernden Zustandsdaten der Umgebung, insbesondere der Pflanzen. So kann mit einer Kamera ein Abbild der Pflanzen gewonnen werden. Mit einem Feuchtesensor kann die Luftfeuchtigkeit oder die Bodenfeuchtigkeit ermittelt werden. Mit einem UV-Sensor kann die aktuelle UV-Einstrahlung bestimmt werden. Mit einem Thermometer kann die Bodentemperatur und/oder die Lufttemperatur gemessen werden. Mit einem Helligkeitssensor kann die aktuelle Helligkeit bestimmt werden. Es ist insbesondere vorgesehen, dass eine dreidimensionale Kartografie angefertigt wird, wobei diese Kartografie den Ort und die Höhe einzelner Pflanzen, einzelner Pflanzengruppen, Gebäuden oder anderweitiger Gegenstände enthält. Die dreidimensionale Kartografie enthält insbesondere auch die Art von Pflanzen und Zonen, die von einem Bodenfahrzeug nicht befahren werden dürfen. Ferner kann die Kartografie Lagerplätze für Arbeitsgeräte, wie Fahrzeuge und Arbeitsmodule oder Sensormodule, beinhalten. Die Erstellung der dreidimensionalen Kartografie kann auf der Basis einer zweidimensionalen Kartografie erfolgen, wobei die zweidimensionale Kartografie von einem Anwender mit Messmitteln oder mit Abbildungen erzeugt worden ist. Mittels der Sensoren 5 kann die Umgebung erfasst werden, um die 2D-Kartografie zu ergänzen.

Es ist eine Sende-/Empfangseinrichtung 19 vorgesehen, mit der eine drahtlose Kommunikation insbesondere über die Datenübertragungseinrichtung 14 möglich ist. Die Sende-/Empfangseinrichtung 19 kann unmittelbar mit einer Basisstation 13 kommunizieren, die ortsfest im Gelände angeordnet ist und deren Lage in der Kartografie des Arbeitsgerätes 1 verzeichnet ist. Die Datenübertragungseinrichtung 14 kann aber auch so eingerichtet sein, dass das Arbeitsgerät 1 unmittelbar mit einem Heimnetzwerk oder dem Internet kommunizieren kann.

Das Arbeitsgerät 1 enthält darüber hinaus einen Akkumulator 25, der bei einem Aufenthalt des Arbeitsgerätes 1 an der Basisstation 13 geladen werden kann und der ansonsten das Arbeitsgerät 1 mit elektrischer Energie versorgt.

Das Arbeitsgerät 1 besitzt eine Vorrichtung zur Aufnahme von Arbeitsmodulen 10, 11, die modulspezifische Werkzeuge 10', 11' tragen. Diese Vorrichtung wird im folgenden Modulträger 2 genannt und ist so ausgebildet, dass das Arbeitsgerät 1 selbsttätig ein Arbeitsmodul 10 gegen ein anderes Arbeitsmodul 11 austauschen kann. Dies erfolgt bevorzugt an der Basisstation 13 oder im Bereich einer Bevorratungsvorrichtung, bspw. eines Schuppens 23, in dem wettergeschützt die Arbeitsmodule 10, 11 bevorratet sind. Dort können in den Zeichnungen nicht dargestellte Mittel vorgesehen sein, bspw. Greifer o. dgl., mit denen die Arbeitsmodule 10, 11 auf dem Modulträger 2 fixiert werden können. Der Modulträger 2 kann eine Modulschnittstelle 18 aufweisen, mit der eine Signal verbindung und eine Stromverbindung zum Arbeitsmodul 10 hergestellt werden kann.

Der Modulträger 2 besitzt eine nicht dargestellte mechanische Schnittstelle und eine nicht dargestellte elektrische Schnittstelle. Die Arbeitsmodule 10, 11 oder ggf. vorhandene Sensormodule besitzen ebenfalls eine mechanische Schnittstelle und ein elektrische Schnittstelle. Die beiden mechanischen Schnittstellen wirken derart miteinander zusammen, dass sie das Arbeitsmodul 10 oder das Sensormodul an den Modulträger 2 mechanisch fesseln. Es kann sich dabei um Haken handeln, um Schraubverbindungen oder um anderweitige Rastverbindungen, die von einer Fesselungsstellung in eine Lösestellung bringbar sind. Mit der elektrischen Schnittstelle kann elektrische Energie vom Arbeitsgerät 1 auf das Arbeitsmodul 10, 11 übertragen werden. Es ist aber auch möglich, elektrische Energie von dem Arbeitsmodul 10, 11 auf das Arbeitsgerät 1 zu übertragen. Darüber hinaus ist vorgesehen, dass über die elektrische Schnittstelle ein Datenaustausch zwischen dem Arbeitsgerät 1 und dem Arbeitsmodul 10, 11 stattfindet. Die elektrische Schnittstelle kann eine Steckverbindung sein. Hierzu greifen Stecker und Gegenstecker ineinander, um elektrisch miteinander in Kontakt zu treten.

In den Zeichnungen sind lediglich beispielhaft ein Arbeitsmodul 10 in Form eines Bewässerungsmoduls dargestellt, welches ein Bewässerungswerkzeug 10' aufweist. Das Bewässerungsmodul 10 kann einen Tank zum Bevorraten von Wasser aufweisen, welcher an der Basisstation 13 befüllbar ist. Es ist aber auch möglich, dass das Bewässerungsmodul 10 mit einem Schlauch verbunden ist, um Wasser von einer Zapfstelle zu bekommen.

Mit der Bezugsziffer 11 ist ein Schnittmodul bezeichnet, welches Schneidwerkzeuge 11' aufweist, mit dem Pflanzen beschnitten werden können. So kann das Schneidwerkzeug 11', bspw. eine Schere oder ein Mähwerk sein. Es kann insbesondere eine Heckenschere oder Astschere sein, mit der Hecken, Bäume oder anderweitige Gewächse beschnitten werden können. Darüber hinaus sind Arbeitsmodule mit speziellen Werkzeugen zur Düngeraustragung, zum Laubrechen, zum Schneeräumen oder zur Bodenauflockerung vorgesehen.

Es können darüber hinaus auch Sensormodule 6 vorgesehen sein, die stationär im Gelände aufgestellt sind oder vom Arbeitsgerät 1 für den jeweiligen Aufgaben-Erfüllungseinsatz an einer geeigneten Stelle im Gelände positioniert werden. Das Sensormodul 6 kann aber auch selbstfahrend sein und selbsttätig zu einem Standort navigieren. Bspw. kann ein Arbeitsgerät 1 hierzu anstelle eines Arbeitsmodules 10, 11 ein Sensormodul tragen.

In einer Variante ist vorgesehen, dass das Sensormodul 9 ein fliegender Sensorroboter ist. Über eine GPS-Steuerung o. dgl. ist diese, eine oder mehrere Luftschrauben aufweisende Drohne in der Lage, vorbestimmte Positionen im Luftraum oberhalb des Geländes einzunehmen, um an verschiedenen Positionen Zustandsdaten zu erfassen.

Bei den Sensoren 5, 7 des Arbeitsgerätes 1 bzw. des Sensormoduls 6, 9 handelt es sich bevorzugt um bildgebende Sensoren, bspw. um eine Kamera, mit der zweidimensionale Bilder aufgenommen werden können. Aus diesen zweidimensionalen Bildern kann die Steuereinrichtung 12 oder die externe Recheneinrichtung 15 dreidimensionale Strukturdaten der Umgebung berechnen. Die Sensoren 5, 7 umfassen darüber hinaus Temperatursensoren zur Ermittlung der Bodentemperatur und/oder Lufttemperatur, Feuchtesensoren, zur Ermittlung der Bodenfeuchte und/oder der Luftfeuchte, UV-Sensoren oder Helligkeitssensoren. Es ist vorgesehen, dass das Arbeitsgerät 1 und/oder das Sensormodul 6, 9 zumindest einen, bevorzugt aber eine Mehrzahl dieser Sensoren aufweist.

Die Sensordaten, die von diesen Sensoren 5, 7 gewonnen werden, werden drahtlos mit Hilfe der Datenübertragungseinrichtung 14 optional an eine externe Recheneinrichtung 15 übertragen.

Gemäß einem Aspekt der Erfindung wird die externe Recheneinrichtung 15 in räumlicher Entfernung, insbesondere von einem externen Server, betrieben. Sie kann aber auch von einem lokalen Rechner ausgebildet sein. Die externe Recheneinrichtung 15 kann mit einer Mehrzahl von Arbeitsgeräten 1, die an unterschiedlichen Standorten betrieben werden, kommunizieren. Die externe Recheneinrichtung 15 ist darüber hinaus in der Lage, mit ein oder mehreren, an unterschiedlichen Standorten bereitgehaltenen Datenkommunikationsgeräten 17 zu kommunizieren, wobei es sich bei den Datenkommunikationsgeräten 17 um mobile Endgeräte, Personalcomputer oder Tabletrechner o. dgl. handeln kann. Über diese Datenkommunikationsgeräte 17 können eine Mehrzahl von Nutzern und insbesondere Mitglieder einer Nutzergruppe Erfahrungswerte und Daten über spezifische, zu pflegende Geländebereiche eingeben. Dabei können auch Kartografien übermittelt werden, wobei die Kartografien durch Erkundungsfahrten des Arbeitsgerätes 1 aufgenommen werden. Ferner können über die Datenkommunikationsgeräte 17 Angaben über die Positionen und die Art von bestimmten Pflanzen im jeweiligen Gelände eingegeben werden.

Die externe Recheneinrichtung 15 besitzt eine Datenbank 16, in der Pflegeinformationen für Pflanzen abgespeichert werden. Die Pflegeinformationen enthalten insbesondere pflanzenspezifische Pflegeangaben, bspw. Angaben über die Jahreszeiten, in denen optimal ein Rückschnitt der Pflanzen zu erfolgen hat, ob die Pflanzen Laub abwerfen, welche Bodenfeuchtigkeiten für die Pflanzen optimal sind, o. dgl. Die Pflegeinformationen enthalten somit insbesondere Bewässerungsinformationen, Schnittinformationen und Reinigungsinformationen. In der Datenbank 16 sind darüber hinaus ortsspezifische Daten abgelegt, die nutzerspezifisch sind und insbesondere die Kartografie des zu pflegenden Geländes enthalten. Die ortsspezifischen Daten können darüber hinaus die Standortdaten der Pflanzen, Angaben über vorhandene Arbeitsmodule 10, 11 umfassen, aktuelle Wetterinformationen und Pflanzenhöhen. Gesetzliche Vorgaben können ebenfalls in der Datenbank abgelegt sein.

Die aktuellen Wetterinformationen, Pflanzenhöhen, Bodenfeuchtigkeit und Luftfeuchtigkeit etc. werden aktuell von den Sensoren 5, 7 der Arbeitsgeräte 1 bzw. Sensormodule 6, 9 gewonnen. Diese Zustandsdaten 24 werden über die Datenübertragungseinrichtung 14 der externen Recheneinrichtung 15 zur Verfügung gestellt und dort abgespeichert.

Die Recheneinrichtung 15 ist in der Lage, aus den Pflegedaten, also den ortsspezifischen Daten 20 und den Pflegeinformationen 21, insbesondere unter Verwendung der aktuellen Zustandsdaten 24, Aufgabendaten 22 zu berechnen. Diese Aufgabendaten 22 beinhalten Aufgaben, die aktuell im Gelände durchzuführen sind, um Pflanzen zu pflegen. Bspw. können die Aufgabendaten 22 Angaben enthalten, an welcher Stelle eine Pflanzenbewässerung vorgenommen werden muss, oder welche Pflanze an welcher Position beschnitten werden muss. Ferner können die Aufgabendaten Angaben enthalten, ob eine Rasenfläche gemäht werden muss oder ob eine Fläche von Laub zu reinigen ist. Hierzu werden auch aus Höhen- und Volumendaten Wachstumshöhendaten berechnet.

Ebenso, wie die Zustandsdaten 24 mit den Sensoren des Arbeitsgerätes 1 oder der Sensormodule 6, 9 gewonnen werden, kann eine autarke Aufgabenerledigung im Gelände unter Verwendung dieser Sensoren 5, 7 erfolgen. Hierzu werden die Sensormodule 6, 9 in eine zur Erfassung der Strukturdaten optimale Position gebracht, bspw. um mit ihren Kameras ein 3D-Bild der zu pflegenden Pflanze zu erzeugen. Mit diesen Strukturdaten werden dann die Werkzeuge 10', 11' der Arbeitsmodule 10, 11 gesteuert.

Die externe Recheneinrichtung 15 kann darüber hinaus auch eine Wissensdatenbank enthalten, in die Nutzer ihre persönlichen Erfahrungen eintragen können bzw. mittels derer Nutzer Fragen an Mitglieder der Nutzergruppen stellen können. Die externe Recheneinrichtung 15 stellt somit eine Kommunikationsplattform ähnlich einer Social-Media-Plattform zur Verfügung, die als Treffpunkt für Anwender eines derartigen autonomen Outdoor-Gerätes dienen kann. Über diese Plattform und insbesondere dieser Plattform angeschlossenen Applikationen können Erfahrungswerte einzelner Anwender für die Gesamtheit aller Anwender aufbereitet werden und z.B. in Form von Tipps, Anwendungsvorschlägen oder -hilfen der Gemeinschaft zur Verfügung gestellt werden. Der Anwender kommuniziert mit dieser Kommunikationsplattform bspw. über ein Steuergerät, bspw. ein Steuergerät des autonomen Outdoor-Gerätes. Eine Kommunikation über ein mobiles Endgerät, einem Tablet-PC und insbesondere per Internetverbindung ist ebenfalls vorgesehen. Auch ist vorgesehen, dass das autonome Arbeitsgerät 1 oder eines der Sensormodule 6, 9 einen berührungsempfindlichen Bildschirm aufweist, über den mit der externen Recheneinrichtung 15 kommuniziert werden kann.

Die Wissensdatenbank kann auch verwendet werden, um abhängig von Tipps oder Erfahrungsdaten, die vom Nutzer in die Datenbank eingespeichert worden sind, Handlungsempfehlungen abzugeben, mit denen das Wachstum einzelner Pflanzen optimiert werden kann.

### Liste der Bezugszeichen

| | | | |
|---|---|---|---|
| 1 | Arbeitsgerät | 24 | Zustandsdaten |
| 2 | Modulträger | 25 | Akkumulator |
| 3 | Fahrwerk | 26 | Kommunikationsschnittstelle |
| 4 | Kehrwerk | | |
| 5 | Sensor | | |
| 6 | Sensormodul | | |
| 7 | Sensor | | |
| 8 | Pflanze | | |
| 8ʹ | Pflanze | | |
| 9 | Drohne | | |
| 10 | Arbeitsmodul | | |
| 10ʹ | Werkzeug | | |
| 11 | Arbeitsmodul | | |
| 11ʹ | Werkzeug | | |
| 12 | Steuereinrichtung | | |
| 13 | Basisstation | | |
| 14 | Datenübertragungseinrichtung | | |
| 15 | Recheneinrichtung | | |
| 16 | Datenbank | | |
| 17 | Datenkommunikationsgerät | | |
| 18 | Modulschnittstelle | | |
| 19 | Sende-/Empfangseinrichtung | | |
| 20 | Daten | | |
| 21 | Pflegeinformationen | | |
| 22 | Aufgabendaten | | |
| 23 | Schuppen | | |

## Patentansprüche

1. System zur Gartenpflege mit zumindest zwei Arbeitsgeräten (1) und einer externen Recheneinrichtung (15), welche eingerichtet ist, mit den zumindest zwei Arbeitsgeräten (1) zu kommunizieren, wobei das Arbeitsgerät (1) selbsttätig im Außenbereich verfahrbar ist und ein von einer Steuereinrichtung (12) gesteuertes Fahrwerk (3) aufweist, wobei die Steuereinrichtung (12) von Sensoren (5) einer Sensorik gewonnene Steuerdaten und ggf. eine in einem Speicherelement gespeicherte Kartografie verwendet, wobei das Arbeitsgerät (1) von der Steuereinrichtung (12) an Orte eines Geländes, an denen eine Aufgabe verrichtet werden soll, bei der dem Arbeitsgerät (1) zugeordnete, aufgabenspezifische Werkzeuge (10', 11') verwendet werden, navigierbar ist, wobei die Werkzeuge (10', 11') jeweils einem Arbeitsmodul (10,11) zugeordnet sind, welches Arbeitsmodul (10,11) austauschbar gegen ein anderes Arbeitsmodul (10,11) mit anderen Werkzeugen (10', 11') dem Arbeitsgerät (1) zugeordnet ist, **dadurch gekennzeichnet, dass** das Arbeitsgerät (1) mit einem Sensormodul (6, 9) zusammenwirkt, welches mit einer Sensorik (7) strukturelle Daten von zu pflegenden Pflanzen erfasst, wobei das Sensormodul (6, 9) ein separat zu dem Arbeitsgerät (1) ausgebildetes externes Sensormodul (6, 9) ist, und wobei das Arbeitsgerät (1) ausgebildet ist, in Abhängigkeit von den Daten eine Verrichtung einer Aufgabe mittels eines Werkzeugs (10', 11') zu steuern, wobei die externe Recheneinrichtung (15) eine Kommunikationsplattform ähnlich einer Social-Media-Plattform zur Verfügung stellt, die als Treffpunkt für Anwender der Arbeitsgeräte (1) dient, wobei die externe Recheneinrichtung (15) eine Wissensdatenbank aufweist, welche persönliche Erfahrungen der Anwender und/oder Fragen an andere Anwender des Systems enthält.

2. System nach Anspruch 1, **dadurch gekennzeichnet, dass** das Arbeitsgerät (1) einen Modulträger (2) aufweist zur Aufnahme des Arbeitsmoduls (10, 11).

3. System nach einem der vorhergehenden Ansprüche, **dadurch gekennzeichnet, dass** das Arbeitsmodul (10) ein Bewässerungswerkzeug (10'), ein Schnittwerkzeug (11'), ein Mähwerkzeug, ein Kehrwerkzeug, Düngemittel-Verteilwerkzeug oder ein Bodenbearbeitungswerkzeug aufweist.

4. System nach einem der vorhergehenden Ansprüche, **dadurch gekennzeichnet, dass** das Arbeitsgerät (1) mit einer Basisstation (13) zusammenwirkt, an der ein oder mehrere Arbeitsmodule (10,11) bereitgehalten werden.

5. System nach einem der vorhergehenden Ansprüche, **dadurch gekennzeichnet, dass** Arbeitsgerät (1) eine Kommunikationsschnittstelle (26) aufweist, mit der mit der externen Recheneinrichtung (15) kommuniziert werden kann.

6. System nach einem der vorhergehenden Ansprüche, **dadurch gekennzeichnet, dass** das Arbeitsgerät (1) zusätzlich ausgebildet ist, Daten mit einem Planungshilfsmittel auszutauschen, welches mit einer Datenbank (16) einer externen Recheneinrichtung (15) zusammenwirkt, in der Pflegeinformationen für Pflanzen beinhaltende Pflegedaten gespeichert sind, aus der Aufgabendaten erzeugt werden, die an das Arbeitsgerät (1) übermittelt werden.

## Claims

1. System for garden care comprising at least two working apparatuses (1) and an external computing device (15) which is designed to communicate with the at least two working apparatuses (1), the working apparatus (1) being automatically movable outdoors and having a chassis (3) controlled by a control device (12), the control device (12) using control data obtained from sensors (5) of a sensor system and optionally cartography stored in a memory element, it being possible for the working apparatus (1) to be navigated by the control device (12) to locations of a terrain at which a task is to be executed, for which task-specific tools (10', 11') assigned to the working apparatus (1) are used, the tools (10', 11') each being assigned to a working module (10, 11), which working module (10, 11) is assigned to the working apparatus (1) so as to be interchangeable with another working module (10, 11) having other tools (10', 11'), **characterised in that** the working apparatus (1) interacts with a sensor module (6, 9) which uses a sensor system (7) to record structural data on plants to be cared for, the sensor module (6, 9) being an external sensor module (6, 9) which is separate from the working apparatus (1), and the working apparatus (1) being designed to control execution of a task by means of a tool (10', 11') depending on the data, the external computing device (15) providing a communication platform similar to a social media platform, which is used as a meeting point for users of the working apparatuses (1), the external computing device (15) having a knowledge base containing personal experiences of users and/or questions to other users of the system.

2. System according to claim 1, **characterised in that** the working apparatus (1) has a module carrier (2) for accommodating the working module (10, 11).

3. System according to either of the preceding claims, **characterised in that** the working module (10) has an irrigation tool (10'), a cutting tool (11'), a mowing tool, a sweeping tool, a fertiliser distribution tool or a soil cultivation tool.

4. System according to any of the preceding claims, **characterised in that** the working apparatus (1) interacts with a base station (13) at which one or more working modules (10, 11) are kept ready.

5. System according to any of the preceding claims, **characterised in that** the working apparatus (1) has a communication interface (26) which can be used to communicate with the external computing device (15).

6. System according to any of the preceding claims, **characterised in that** the working apparatus (1) is additionally designed to exchange data with a planning aid which interacts with a database (16) of an external computing device (15), in which care data containing care information for plants are stored, from which care data task data are generated that are transmitted to the working apparatus (1).

## Revendications

1. Système pour l'entretien de jardin avec au moins deux appareils de travail (1) et un dispositif informatique externe (15) qui est conçu pour communiquer avec les au moins deux appareils de travail (1), dans lequel l'appareil de travail (1) peut se déplacer automatiquement à l'extérieur et présente un système de circulation (3) commandé par un dispositif de commande (12), dans lequel le dispositif de commande (12) utilise des données de commande obtenues à partir de capteurs (5) d'un système à capteurs et, le cas échéant, une cartographie stockée dans un élément de mémoire, dans lequel l'appareil de travail (1) peut être navigué par le dispositif de commande (12) vers des emplacements d'un terrain où doit être exécutée une tâche pour laquelle sont utilisés des outils (10, 11') spécifiques à la tâche qui sont associés à l'appareil de travail (1), dans lequel les outils (10', 11') sont associés chacun à un module de travail (10, 11) lequel module de travail (10, 11) est associé à l'appareil de travail (1) de manière interchangeable avec un autre module de travail (10, 11) comportant d'autres outils (10', 11'), **caractérisé en ce que** l'appareil de travail (1) interagit avec un module capteur (6, 9) qui détecte des données structurelles de plantes à entretenir au moyen d'un système à capteur(s) (7), dans lequel le module capteur (6, 9) est un module capteur externe (6, 9) formé séparément de l'appareil de travail (1) et dans lequel l'appareil de travail (1) est conçu pour commander une exécution d'une tâche au moyen d'un outil (10ʹ, 11') en fonction des données, le dispositif informatique externe (15) mettant à disposition une plate-forme de communication similaire à une plate-forme de médias sociaux servant de point de rencontre pour des utilisateurs de l'appareil de travail (1), le dispositif informatique externe (15) comprenant une base de données de connaissances contenant des expériences personnelles des utilisateurs et/ou des questions à d'autres utilisateurs du système.

2. Système selon la revendication 1, **caractérisé en ce que** l'appareil de travail (1) comprend un support de module (2) pour recevoir le module de travail (10, 11).

3. Système selon l'une des revendications précédentes, **caractérisé en ce que** le module de travail (10) comprend un outil d'arrosage (10), un outil de coupe (11'), un outil de fauchage, un outil de balayage, un outil de distribution d'engrais ou un outil de traitement du sol.

4. Système selon l'une des revendications précédentes, **caractérisé en ce que** l'appareil (1) coopère avec une station de base (13) à laquelle un ou plusieurs modules de travail (10, 11) sont tenus prêts.

5. Système selon l'une des revendications précédentes, **caractérisé en ce que** l'appareil de travail (1) comprend une interface de communication (26) permettant de communiquer avec le dispositif informatique externe (15).

6. Système selon l'une des revendications précédentes, **caractérisé en ce que** l'appareil de travail (1) est en outre conçu pour échanger des données avec un moyen d'aide à la planification qui interagit avec une base de données (16) d'un dispositif informatique externe (15) dans laquelle sont stockées des données d'entretien contenant des informations d'entretien pour des plantes, à partir desquelles sont générées des données de tâches qui sont transmises à l'appareil de travail (1).
